## Europäisches Patentamt
## European Patent Office
## Office européen des brevets

(19)

(11) Veröffentlichungsnummer: **0 016 950**
**B1**

(12) **EUROPÄISCHE PATENTSCHRIFT**

(45) Veröffentlichungstag der Patentschrift: **22.06.83**

(51) Int. Cl.³: **H 04 M 1/50**

(21) Anmeldenummer: **80100852.5**

(22) Anmeldetag: **21.02.80**

(54) **Schaltungsanordnung zur Umschaltung von tonfrequenter Signalabgabe auf Sprechbetrieb und umgekehrt in Fernmeldegeräten.**

(30) Priorität: **21.02.79 DE 2906579**

(43) Veröffentlichungstag der Anmeldung:
**15.10.80 Patentblatt 80/21**

(45) Bekanntmachung des Hinweises auf die Patenterteilung:
**22.06.83 Patentblatt 83/25**

(84) Benannte Vertragsstaaten:
**AT BE FR IT LU NL**

(56) Entgegenhaltungen:
**CA - A - 861 632**
**CH - A - 491 562**
**FR - A - 2 155 666**
**FR - A - 2 279 283**

(73) Patentinhaber: **Licentia Patent-Verwaltungs-GmbH**
**Theodor-Stern-Kai 1**
**D-6000 Frankfurt/Main 70 (DE)**

(72) Erfinder: **Rall, Bernhard, Dipl.-Ing.**
**Albecker Steige 67**
**D-7900 Ulm (DE)**

(74) Vertreter: **Schulze, Harald Rudolf, Dipl.-Ing.**
**Licentia Patent-Verwaltungs-GmbH Theodor-Stern-Kai 1**
**D-6000 Frankfurt/Main 70 (DE)**

Courier Press, Leamington Spa, England.

## Schaltungsanordnung zur Umschaltung von tonfrequenter Signalabgabe auf Sprechbetrieb und umgekehrt in Fernmeldegeräten

Die Erfindung betrifft eine Schaltungsanordnung zur Umschaltung von tonfrequenter Signalabgabe auf Sprechbetrieb und umgekehrt in Fernmeldegeräten, vorzugsweise Fernsprechgeräten, mit einem Sprechkreis (SpK) und in einem Tastwahlbaustein (TWB) integrierten, aus der Leitungsschleife (3,4) gespeisten Tonsignalgeneratoren (TSG) mit einer Tastenanordnung (Ta) zur Teilnehmerwahl, bei der zwei wechselseitig betriebene elektronische Schalter (50,60) vorgesehen sind, wobei der erste Schalter als NPN-Transistor (50) ausgebildet ist, dessen Kollektor am positiven Ende (3) der Leitungsschleife und dessen Emitter mit dem einen Eingang des Tastwahlbausteins (TWB) verbunden ist, dessen anderer Eingang am negativen Ende (4) der Leitungsschleife angeschlossen ist, und der zweite Schalter (60) zwischen dem negativen Ende (4) der Leitungsschleife und dem Sprechkreis (SpK) geschaltet ist, der Verbindungspunkt (Anschluß 8) zwischen Sprechkreis (SpK) und zweitem Schalter (60) zur Steuerung des ersten Schalters mit der Basis des NPN-Transistors (50) verbunden ist und bei der der Tastwahlbaustein (TWB) außer den Tonsignalgeneratoren (TSG) eine an die Tastenanordnung (Ta) angeschlossene und den zweiten Schalter (60) steuernde Tastwahlschaltung (TWS) enthält, deren einer Anschluß mit dem negativen Ende (4) der Leitungsschleife verbunden ist.

Nach den heute bestehenden Vorschriften der Postverwaltungen darf die Einführung des Mehrfrequenzcodewahlverfahrens (MFV) die Übertragungseigenschaften der Sprechschaltung im Fernsprechapparat nicht verändern. Das bedeutet, daß ein Umschalter vom Sprechkreis zum Wählkreis ein nahezu idealer Schalter sein muß, der keinen Übergangswiderstand aufweist und keinen Spannungsabfall in die Leitungsschleife zusätzlich einfügen darf.

Diese Forderung ist jedoch nur im Falle von extrem hohen Leitungswiderständen der Leitungsschleife sinnvoll. Extrem hohe Leitungswiderstände sind jedoch selten und wirken sich nach Einführung elektronischer Mikrofone nicht mehr nachteilig aus. Diese Forderung bedeutet, daß wegen weniger als 0,5% der Fernsprechteilnehmer erhebliche Kosten für alle Fernsprechgeräte entstehen, denn ein praktisch idealer Schalter erfordert ein bistabiles Relais und einen von allen Tasten mitbetätigten Umschaltkontakt in der Tastenanordnung. Eine solche Tastenanordnung ist jedoch mechanisch aufwendig und kostet etwa doppelt soviel wie ein einfacher Tastensatz ohne gemeinsamen Umschaltkontakt.

Aus der DE—OS—25 48 679 ist eine Schaltungsanordnung der eingangs genannten Art bekannt. Die beiden wechselseitig betriebenen elektronischen Schalter werden jedoch dort von einer gemeinsamen Leitung getrennt gesteuert. Dabei ist parallel zum Sprechkreis ein den Sprechkreis bedämpfender Widerstand erforderlich. Als Wähltasten sind piezoelektrische Signalgeber vorgesehen, wobei jeweils zwei der piezoelektrischen Signalgeber gleichzeitig betätigt werden müssen. Damit steht jedoch keine weitere Stromquelle für eine Kontrolle der ordnungsgemäßen Funktion der Wähltasten, für einen eventuell erforderlichen Prellschutz und/oder für die Auswertung einer elektronischen Ansteuerung zur Verfügung, wie es z. B. bei Verwendung einer Schaltungsanordnung der eingangs genannten Art als Wahlumsetzer von Impulswahl auf tonfrequente Signalabgabe erforderlich ist.

Eine weitere Schaltungsanordnung zur Umschaltung von tonfrequenter Signalabgabe auf Sprechbetrieb und umgekehrt ist auch aus der CH—PS—491 562 bekannt. Dabei wird der Tonerzeugerteil mit Tastwahlanordnung über einen Widerstand gespeist, dessen Spannungsabfall bei Betätigung einer Wähltaste wechselseitig betriebene Transistoren so steuert, daß der in Reihe mit einem der Transistoren liegende Sprechkreis abgeschaltet wird. Jedoch erhält der Tonerzeugerteil im Sprechbetrieb über den Widerstand stets die volle Schleifenspannung, so daß bei Integration des Tastwahlbausteins auf einem Halbleiterchip wegen der geringen Spannungsfestigkeit der Transistoren ein zuverlässiger Betrieb nicht gewährleistet ist. Auch läßt sich aus den gleichen Gründen der am Tonerzeugungsteil angeschlossene Transistor nicht integrieren. Außerdem wird über die Wahltasten nahezu der gesamte Schleifenstrom geschaltet.

Die Erfindung geht von der aus der FR—PS—2 155 666 bekannten Schaltungsanordnung aus. Bei dieser wird zwar der erste Schalter vom zweiten Schalter gesteuert. Jedoch ist für die Steuerung des zweiten Schalters ein Transistor vorgesehen, dessen Kollektorwiderstand parallel zum Sprechkreis liegt und daher diesen im Sprechbetrieb bedämpft. Diese bekannte Schaltung ist wegen der ungünstigen Potentialverhältnisse an den Tasten ebenfalls für eine Integration auf einem Halbleiterchip ungeeignet und auch als Wahlumsetzer von Impulswahl auf tonfrequente Signalabgabe nicht verwendbar.

Der Erfindung liegt die Aufgabe zugrunde, den Stand der Technik zu verbessern. Insbesondere soll eine Schaltung der eingangs genannten Art angegeben werden, die in einem Tastwahlbaustein für das MFV (Mehrfrequenzcodewahlverfahren) in einfacher Halbleitertechnologie integriert werden kann, die im Sprechbeitrieb den Sprechkreis möglichst wenig bedämpft, zuverlässig arbeitet, mit möglichst wenig Kontekten der Tastenanordnung auskommt und möglichst wenig externe Bauelemente erfordert.

Die Aufgabe wird durch eine Schaltungsanordnung mit den im Anspruch 1 genannten Merkmalen gelöst. Es ist nunmehr möglich, den elektronischen Umschalter für Wählbetrieb auf Sprechbetrieb einschließlich Steuerschaltung und Logikschaltung im Tastwahlbaustein eines Fernsprechgerätes problemlos zu integrieren. Dadurch wird eine wesentliche Reduzierung der Kosten für die Tastwahleinrichtung erzielt bei gleichzeitiger Erhöhung ihrer Betriebssicherheit. Die zusätzlichen Dämpfungsverluste im Sprechkreis sind praktisch vernachlässigbar.

Vorteilhafte Weiterbildungen und Ausgestaltungen der Erfindung sind in den Unteransprüchen angegeben.

Die Verwendung der I²L-Technik erlaubt die Ausnutzung des Spannungsabfalls am durchgeschalteten zweiten Schalter, um diesen bei einer Tastenbetätigung zu sperren und dadurch von der Sprechschaltung auf die Wählschaltung umzuschalten.

Durch die Ausgestaltung der Erfindung nach Anspruch 2 erzielt man eine Empfindlichkeit des zweiten Schalters, die ausreichend ist, um ihn sicher durch eine bistabile Halbleiter-Halteschaltung in beiden Schaltzuständen zu halten.

Eine vorteilhafte Halbleiter-Halteschaltung ist im Anspruch 4 angegeben. Am Eingang der Halteschaltung und an der Basis des dritten NPN-Transistors liegen die Spannungspegel in vorteilhafter Weise in einer für die Ansteuerung aus der I²L-Logikschaltung angepaßten Höhe vor.

Anspruch 6 gibt eine vorteilhafte Ausbildung der Eingangsstufe der Logikschaltung zur Sicherstellung, daß die Logikschaltung während des Umschaltens vom Sprechbetrieb auf Wählbetrieb ihren durch einen Tastendruck eingenommenen Zustand beibehält.

Die Erfindung wird nun anhand von Zeichnungen und einem Ausführungsbeispiel näher erläutert. Es zeigen im einzelnen:

Fig. 1 Blockschaltbild eines Tastwahl-Fernsprechapparates mit mechanischem Umschalter;

Fig. 2 Blockschaltbild eines elektronisch realisierbaren Umschalters;

Fig. 3 prinzipielles Blockschaltbild einer bekannten Schaltungsanordnung;

Fig. 4 Prinzipschaltung der Schaltungsanordnung mit Transistoren als Schalter gemäß der Erfindung;

Fig. 5 Schaltung des zweiten Schalters mit Steuerschaltung;

Fig. 6 Frequenzsteuerleitungen und Tastenschaltung;

Fig. 7 Prinzip der Logikschaltung;

Fig. 8 Ausführungsbeispiel der Logikschaltung.

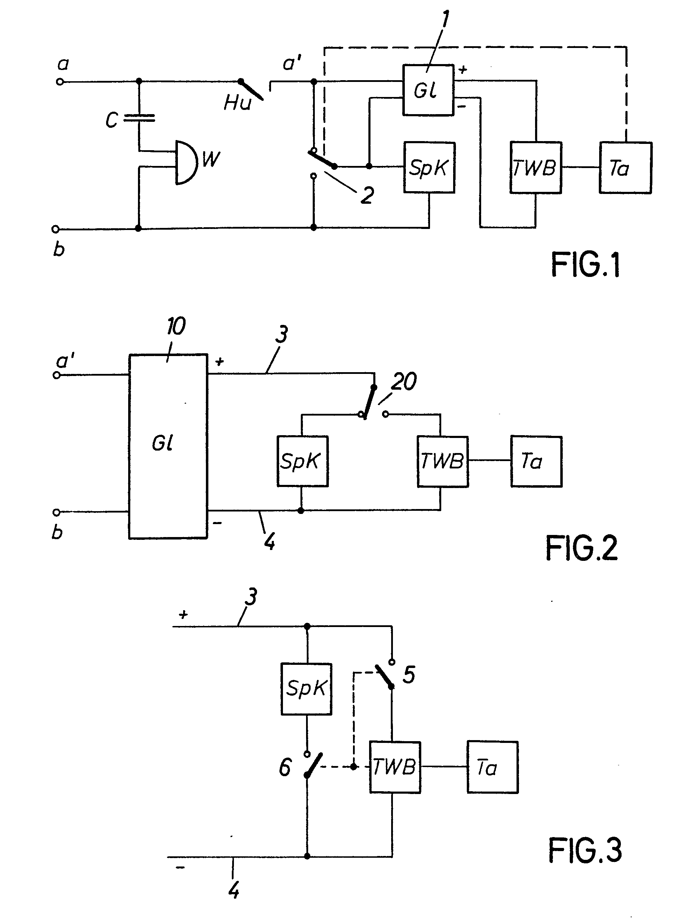

In Fig. 1 ist das Blockschaltbild eines zur Zeit üblichen Tastwahl-Fernsprechgerätes mit mechanischem Umschalter 2 dargestellt. Der Anschluß der Leitungsschleife ist mit a und b bezeichnet. Es folgen Wecker W mit Kondensator C. Nach dem Gabelumschalter HU ist die beim Schließen des Gabelumschalte-Kontaktes mit a verbundene Leitung mit a' bezeichnet.

In der gezeichneten Stellung schließt der Umschalter 2 den Sprechkreis SpK an die Leitung a'. Beim Drücken einer Taste der Tastenanordnung Ta wird, mechanisch gesteuert, der Umschalter 2 umgeschaltet. Dadurch ist der Sprechkreis kurzgeschlossen und die Leitungsschleife speist über einen Doppelweggleichrichter 1 einen Tastwahlbaustein TWB, welcher die Tonsignalgeneratoren für die Aussendung der Signale gemäß dem MFV (Mehrfrequenzcodewahlverfahren) enthält. Der Doppelweggleichrichter ist erforderlich, weil der Tastwahlbaustein nur bei richtiger Polung die erforderlichen Signale aussenden kann. Er schützt somit den Tastwahlbaustein gegen Verpolen der Anschlüsse a und b.

Der mechanische Kontakt 2 ist unempfindlich gegen Verpolung der Anschlußklemmen a und b.

In Fig. 2 ist das Blockschaltbild eines elektronisch realisierbaren Umschalters dargestellt. Zum Schutz gegen Verpolung ist hier der Doppelweggleichrichter 1 als Doppelweggleichrichter 10 an den Leitungen a' und b angeschlossen, so daß nunmehr der Umschalter 20, der Sprechkreis SpK und der Tastwahlbaustein TWB auch bei Verpolung der Anschlüsse a und b stets von einem Strom in gleicher Richtung durchflossen werden. Diese Schaltung hat jedoch den Nachteil, daß der Umschalter 20 über einen zusätslichen Kontakt beim Betätigen einer Taste der Tastenanordnung gesteuert werden maß, da in der gezeichneten Stellung des Umschalters 20 der Tastwahlbaustein stromlos ist.

In Fig. 3 ist das prinzipielle Blockschaltbild einer Schaltungsanordnung gemäß der DE—OS—25 48 679 dargestellt. Der Umschalter 20 ist hier aufgeteilt in zwei elektronische Schalter 5 und 6, die wechselseitig betrieben werden. Wenn also der eine Schalter geschlossen ist, ist jeweils der andere geöffnet. Der erste Schalter 5 ist zwischen dem positiven Ende 3 der Leitungsschleife und dem Tastwahlbaustein TWB geschaltet, wobei der zweite Eingang des Tastwahlbausteins mit dem negativen Ende 4 der Leitungsschleife verbunden ist. Der zweite Schalter 6 ist zwischen dem negativen Ende 4 der Leitungsschleife und dem Sprechkreis SpK geschaltet, dessen anderer Anschluß an dem positiven Ende 3 der Leitungsschleife angeschlossen ist.

Die Schaltungsanordnung kann, wie in Fig. 2 bereits gezeigt, von einem Gleichrichter 10 gespeist werden, der zweckmäßigerweise zur Begrenzung der Versorgungsspannung der Schaltungsanordnung zwei Leistungszenerdioden in der Brücken-Gleichrichterschaltung enthält. Diese werden zweckmäßigerweise so bemessen, daß die Spannung zwischen den Leitungen 3 und 4 einen vorgegebenen Wert, beispielsweise 15 V, nicht überschreitet.

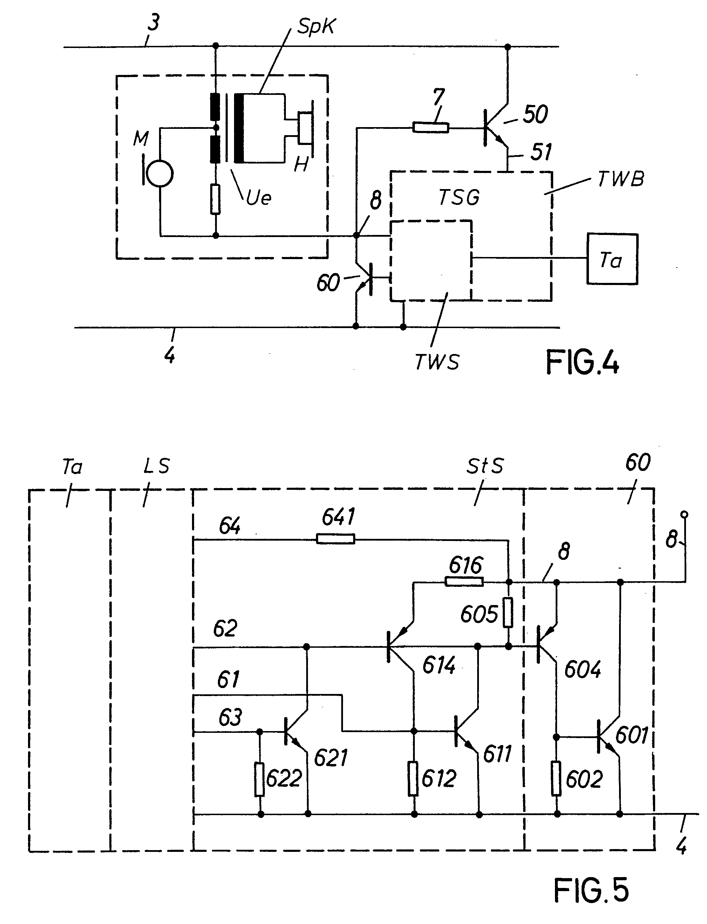

Bei der Erfindung soll der erste Schalter 5 von dem zweiten Schalter 6 steuerbar sein. Eine hierfür vorteilhafte Schaltungsanordnung zeigt Fig. 4. Die Figur zeigt das Prinzipschaltbild der erfindungsgemäßen Schaltungsanordnung mit Transistoren als Schalter. Die beiden als Schalter vorgesehehnen Transistoren sind hier mit 50 und 60 bezeichnet. Wie Fig. 4 ferner zeigt, enthält der Tastwahlbaustein TWB außer den Tonsignalgeneratoren TSG eine an die Tastenanordnung Ta angeschlossene und den zweiten Schalter 60 steuernde Tastwahlschaltung TWS. Die Tastwahlschaltung ihrerseits ist zwischen dem einen Anschluß 8 und dem anderen Anschluß des zweiten Schalers 60 so angeschlossen, daß beim Sprechbetrieb und dabei geschlossenem zweiten Schalter 60 vom Spannungsabfall am zweiten Schalter 60 die Betriebsspannung der Tastwahlschaltung TWS abgeleitet ist. Der andere Anschluß des zweiten Schalters 60 ist mit dem negativen Ende 4 der Leitungsschleife verbunden.

Aus Fig. 4 ist ferner ersichtlich, daß die in Fig. 3 mit 5 und 6 bezeichneten Schalter hier als NPN-Transistoren 50 und 60, also Transistoren vom gleichen Leitfähigkeitstyp, ausgebildet sind, wobei der Kollektor des als zweiten Schalter verwendeten Transistors 60 über den einen Anschluß 8 und einen Widerstand 7 mit der Basis des als ersten Schalter verwendeten Transistors 50 verbunden ist. Der Anschluß 8 ist außerdem mit dem negativen Ende des Sprechkreises SpK verbunden.

Wird Transistor 60 durchgeschaltet, so fließt der Leitungsschleifenstrom vom positiven Ende 3 der Leitungsschleife über den Sprechkreis SpK und Transistor 60 zum negativen Ende 4 der Leitungsschleife. De der Kollektor des Transistors 60 im durchgeschalteten Zustand des Transistors nahezu auf Emitterpotential liegt, ist über den Widerstand 7 der Transistor 50 gesperrt und der Tastwahlbaustein erhält lediglich die geringe Versorgungsspannung, die zwischen Kollektor und Emitter des Transistors 60 liegt. Wird jedoch der Transistor 60 gesperrt, so steigt seine Kollektorspannung bis zum Potential der Leitung 3. Durch den Sprechkreis SpK und den Widerstand 7 fließt nun lediglich der Basisstrom des ausgesteuerten Transistors 50. Damit steht für den Tastwahlbaustein und insbesondere den Tonsignalgeneratoren der gesamte, durch die Leitungen 3 und 4 fließende Schleifenstrom zur Verfügung, insbesondere, wenn Transistor 50 ein Darlingtontransistor mit hoher Stromverstärkung ist.

In Fig. 5 ist die Tastwahlschaltung TWS ausführlicher dargestellt. Sie besteht aus einer Steuerschaltung StS für den Transistor 60 und einer Logikschaltung LS zur Ansteuerung der Steuerschaltung in Abhängigkeit von der Tastenbetätigung. Die Tastwahlschaltung wird vom Spannungsabfall zwischen Kollektor und Emitter des als zweiten Schalter verwendeten Transistors 60 gespeist. Diese Spannung zwischen Anschluß 8 und Leitung 4 ist bei durchgeschaltetem Transistor 60 etwa 0,8 V, so daß in vorteilhafter Weise die Logikschaltung LS in I²L-Technik, die bekanntlich mit sehr niedrigen Spannungen und Strömen auskommt, ausgeführt werden kann.

Die Steuerschaltung enthält im wesentlichen den als zweiten Schalter verwendeten Transistor 60, eine aus den Transistoren 611 und 614 bestehende PNPN-Halteschaltung und einen dritten NPN-Transistor 621. Der zweite Schalter 60 ist in vorteilhafter Weise als komplementäre Darlington-Transistorschaltung ausgebildet, dessen Leistungstransistor 601 vom NPN-Typ im wesentlichen als zweiter Schalter wirkt. Die Basis des transistors 601 ist zum einen über den Widerstand 602 mit dem negativen Ende 4 der Leitungsschleife verbunden und zum anderen an den Kollektor eines ersten PNP-Transistors 604 angeschlossen. Der Kollektor des Transistors 601 ist der eine Anschluß 8 und der Emitter der andere Anschluß des zweiten Schalters 60.

Am Anschluß 8 ist auch der Emitter des Transistors 604 angeschlossen, dessen Basis zum einen über einen Widerstand 605 mit dem Anschluß 8 verbunden ist und zum anderen Eingang der Darlington-Transistorschaltung ist.

An den Eingang der Darlington-Transistorschaltung ist die PNPN-Halteschaltung angeschlossen. Der Emitter ihres NPN-Transistors 611 ist mit dem negativen Ende der Leitungsschleife verbunden, die Basis

1. über einen Widerstand 612 mit dem negativen Ende 4 der Leitungsschleife;

2. mit dem Kollektor des zweiten PNP-Transistors 614 und

3. mit einem ersten Ausgang 61 der Logikschaltung LS.

Der Kollektor des Transistors 611 ist mit den Basisanschlüssen der PNP-Transistoren 614 und 604, und damit auch mit dem Eingang der Darlington-Transistorschaltung und mit einem zweiten Ausgang 62 der Logikschaltung LS verbunden. Ferner ist an der Basis des Transistors 614 der Kollektor des dritten NPN-Transistors 621 angeschlossen, dessen Basis über einen Widerstand 622 mit dem negativen Ende 4 der Leitungsschleife und an einen dritten Ausgang 63 der Logikschaltung LS angeschlossen ist. Die Emitter aller NPN-Transistoren 601, 611 und 621 sind mit dem negativen Ende der Leitungsschleife 4 verbunden und die Emitter der PNP-Transistoren 604 und 614 direkt oder, im Falle des Transistors 614, über einen Widerstand 616 mit dem Anschluß 8 des zweiten Schalters 60 verbunden.

Ist Schalter 60 gesperrt, so wird über den Anschluß 8 der Transistor 50 (Fig. 4) eingeschaltet und ein Schleifenstrom zwischen 10 und 100 mA fließt in den Tastwahlbaustein TWB. Wird der Transistor 60 durchgeschaltet, so fließt ein etwa gleich großer Schleifenstrom

7 **0016950** 8

über den Sprechkreis, über Anschluß 8 und Transistor 60 zum negativen Ende 4 der Leitungsschleife.

In Stellung "Sprechen" fließt der Schleifenstrom im wesentlichen durch den Transistor 601. Seinen Basisstrom erhält der Transistor 601 über den Transistor 604. Dadurch liegt die Spannung zwischen Kollektor und Emitter des Transistors 601 im durchgeschalteten Zustand des Transistors 601 bei etwa 800 mV. Die Transistoren 601 und 604 bilden eine Komplementär-Darlington-Transistorschaltung.

Für den Basisstrom des Transistors 604 sorgt der Transistor 611, der in Verbindung mit dem Transistor 614 die PNPN-Halteschaltung bildet, die zwei stabile Zustände besitzt, da das Einschalten des Transistors 614 über Leitung 62 auch den Transistor 611 einschaltet, dessen Kollektorstrom wiederum den Transistor 614 in eingeschaltetem Zustand hält.

Zum Umschalten von "Wählen" auf "Sprechen" wird beispielsweise ein positives Signal auf Leitung 63 gegeben und dadurch der Transistor 621 eingeschaltet. Dessen Kollektorstrom wird von den Transistoren 614, 611, 604 und 601 verstärkt und schaltet den Transistor 601 durch.

Wird jedoch gewählt, so verbindet die Logik die Leitungen 63 und 61 mit Leitung 4. Dadurch werden die Transistoren 621 und 611 gesperrt, ebenso die Halteschaltung und Transistor 604, wodurch auch der Transistor 601 gesperrt wird. Die Widerstände 602, 605, 612 und 622 zwischen den Basis-Emitter-Strecken der Transistoren 601, 604, 611 bzw. 621 sorgen dafür, daß auch bei fehlenden Steuersignalen die genannten Transistoren sicher im gesperrten Zustand verbleiben.

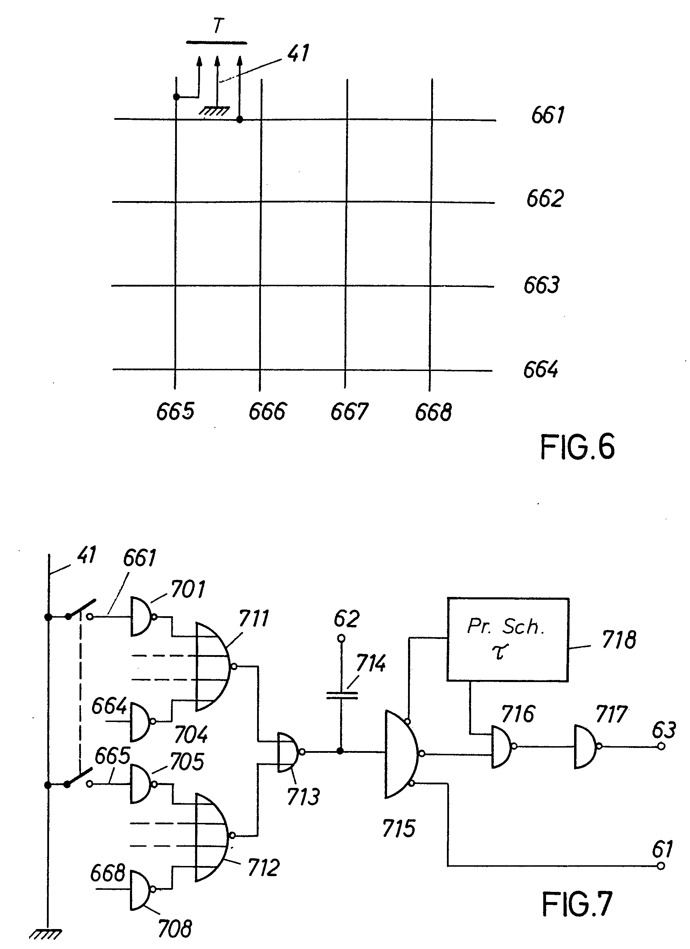

Um die Tastenanordnung mit möglichst wenig Kontakten ausbilden zu können, ist zur Ansteuerung der Steuerschaltung eine Logikschaltung LS vorgesehen, die beim Sprechbetrieb ebenfalls vom Spannungsabfall am zweiten Schalter 60 gespeist wird. Da das MFV-System mit acht verschiedenen Frequenzen arbeitet, die von der Tastenanordnung, wie Figur 6 zeigt, über acht matrixförmig angeordnete Frequenzsteuerleitungen angesteuert werden, ist in der Logikschaltung, wie Figur 6 und 7 zeigen, für jede Frequenzsteuerleitung (vier Zeilenleitungen und vier Spaltenleitungen) ein Anschluß 66i (i=1, 2, 3,..., 8) vorgesehen.

In Figur 7 ist zum besseren Verständnis der Erfindung zunächst das Prinzip der Logikschaltung LS dargestellt. Sämtliche Frequenzsteuerleitungen 66i sind, wie Figur 6 bereits zeigt, über die Tasten T des Tastensatzes über die, an das negative Ende 4 der Leitungsschleife angeschlossenen Leitung 41 mit Massepotential verbindbar. In vorteilhafter Weise genügt es bei der erfindungsgemäßen Schaltung, daß jede Taste der Tastenanordnung beim Drücken jeweils zwei Frequenzsteuerleitungen für die Tonsignalgeneratoren auf Bezugspotential (Massepotential=negatives Ende 4 der Leitungsschleife) schaltet. Zur Steuerung der Logikschaltung und Kontrolle einer einwandfreien Tastenfunktion ist die Logikschaltung mit je einem ersten Inverter 701 bis 708 an alle Frequenzsteuerleitungen 661 bis 668 angeschlossen. Die ersten Inverter 701 bis 708 sind in zwei Gruppen aufgeteilt, wobei die an Frequenzsteuerleitungen einer ersten Frequenzgruppe angeschlossenen ersten Inverter 701 bis 704 an den Eingängen eines ersten NOR-Gliedes 711 und die an Frequenzsteuerleitungen einer zweiten Frequenzgruppe angeschlossenen ersten Inverter 705 bis 708 an den Eingängen eines zweiten NOR-Gliedes 712 angeschlossen sind. Der Ausgang des ersten NOR-Gliedes 711 und der Ausgang des zweiten NOR-Gliedes 712 ist mit den beiden Eingängen eines dritten NOR-Gliedes 713 verbunden. Ferner ist der Ausgang des dritten NOR-Gliedes 713 mit dem Eingang eines mehrere getrennte Ausgänge aufweisenden zweiten Inverter 715 verbunden.

Ein erster Ausgang des zweiten Inverters 715 bildet den ersten Ausgang 61 der Logikschaltung LS. Ein zweiter Ausgang des zweiten Inverters 715 ist an eine, dem Prellschutz dienende Verzögerungsschaltung 718 angeschlossen, deren Ausgang gemeinsam mit einem dritten Ausgang des zweiten Inverters 715 den beiden Eingängen eines NAND-Gliedes 716 zugeführt ist. Schließlich ist der Ausgang des NAND-Gliedes 716 über einen Inverter 717 mit dem dritten Ausgang 63 der Logikschaltung LS verbunden.

Im Sprechkreis sind alle Tasten T geöffnet und die Eingänge sämtlicher Inverter 701 bis 708 liegen auf hohem Pegel. Dadurch liegen auch die Ausgänge der NOR-Glieder 711 und 712, der Inverter 715 und 717 und somit auch die Ausgänge 61 und 63 auf hohem Pegel, wodurch Schalter 60 in Figur 4 und 5 geschlossen und Schalter 50 in Figur 4 in gewünschter Weise gesperrt ist.

Wird eine Taste der Tastenanordnung (siehe Figur 6) ordnungsgemäß gedrückt, so bekommen gemäß Figur 7, in welcher beispielsweise die Taste der Frequenzsteuerleitungen 661 und 665 stellvertretend für alle übrigen Tasten eingezeichnet wurde, die beiden Frequenzsteuerleitungen 661 und 665 und damit die Ausgänge der NOR-Glieder 711 und 712 und der beiden Inverter 715 und 717 Nullpotential, wodurch Schalter 60 in Figur 4 und 5 gesperrt und Schalter 50 (Figur 4) leitend gesteuert wird. Während jedoch über den Ausgang 61 der Transistor 611 in Figur 5 sofort gesperrt wird, bleibt Transistor 621, der am Ausgang 63 angeschlossen ist, noch leitend, bis vom Prellschutz 718 verzögert an beiden Eingängen des NAND-Gliedes 716 Nullpegel vorliegt. Erst dann wird über den Ausgang 63 auch Transistor 621 gesperrt und die Widerstände 612 und 605 der PNPN-Halteschaltung (Figur 5) können die Transistoren 611, bzw. 614 und 604 gesperrt

5

halten. Durch das Einfügen des Prellschutzes in der gezeigten Weise bleiben kurzzeitige Potentialwechsel am Ausgang des zweiten Inverters während eines eventuellen Prellens eines Kontaktes einer gedrückten Taste unwirksam.

Ist nun Schalter 60 gesperrt, so ist gleichzeitig Schalter 50 (vergl. Figur 4) leitend und die Tongeneratoren des Tastwahlbausteins TWB sind in der Lage, die den auf Massepotential gelegten Frequenzsteuerleitungen entsprechenden Tonfrequenzen auszusenden.

Wird nun die Teste des Tastensatzes losgelassen, so kehren sich die Ausgangspegel aller NOR-Glieder und der Inverter 715 und 717 um und über Ausgang 61 wird der Transistor 611 (Figur 5) und damit Schalter 60 leitend geschaltet.

Bei ungenügendem Tastendruck einer Taste kann es vorkommen, daß lediglich einer ihrer beiden Kontakte schließt. In diesem Fall bekommt lediglich der Ausgang eines NOR-Gliedes 711 oder 712 Nullpotential, so daß das NOR-Glied 713 am Ausgang weiterhin auf Nullpotential und somit Schalter 60 leitend in Stellung "Sprechen" bleibt.

Beim Übergang von "Sprechen" auf "Wählen" und umgekehrt wird für einige Mikrosekunden ein Betriebszustand durchlaufen, bei dem sowohl der Transistor 50 (Figur 4) als auch Transistor 60 bzw. 601 stromlos sind. Damit während dieser Übergangszeit die Logikschaltung im bereits eingenommenen Zustand verbleibt, ist ein Kondensator 714 vorgesehen, der, wie Figur 7 zeigt, in vorteilhafter Weise zwischen drittem NOR-Glied 713 und zweitem Inverter 715 angeschlossen ist. Sein anderes Ende ist mit dem zweiten Ausgang 62 der Logikschaltung verbunden. Für die Kapazität dieses Kondensators genügen etwa 10 pF, so daß er sich ohne Schwierigkeiten in der Logikschaltung integrieren läßt.

In vorteilhafter Weise lassen sich die NOR-Glieder 711, 712 und 713, die zweiten und dritten Inverter 715 und 717 und das NAND-Glied 716 in der I²L-Technik realisieren.

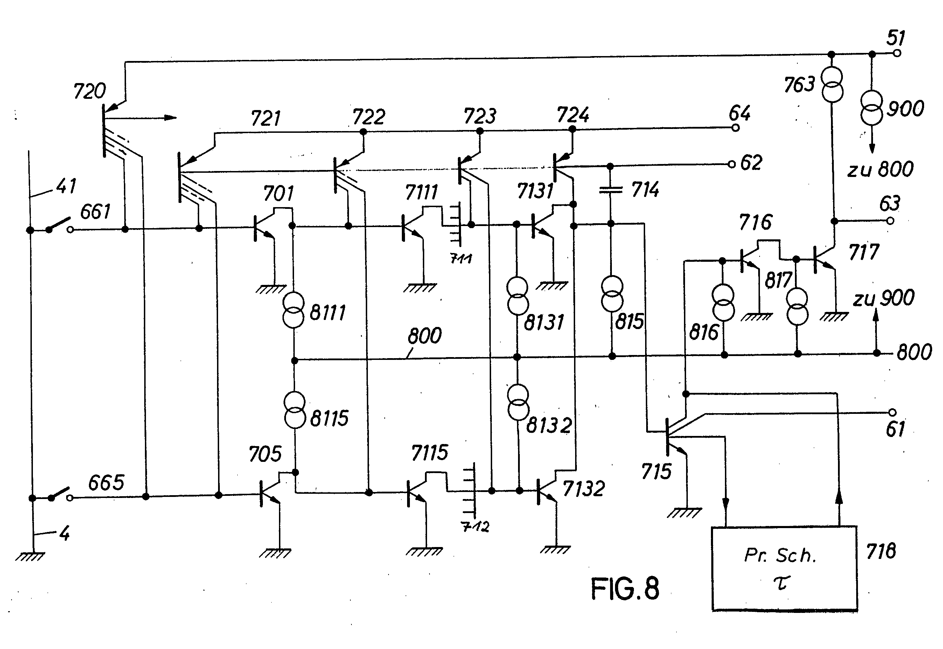

Ein vorteilhaftes Ausführungsbeispiel, bei welchem von den oben genannten Merkmalen Gebrauch gemacht ist, zeigt Figur 8. Bauteile, die denjenigen der Figur 7 entsprechen, sind mit gleichen oder erweiterten Bezugszeichen versehen. Es wurden lediglich zur besseren Übersicht die beiden Frequenzsteuerleitungen 661 und 665 dargestellt und somit von den acht Invertern 701 bis 708 nur die Inverter 701 und 705, die beim Drücken der in Figur 6 gezeigten Taste in Tätigkeit treten.

Am Ausgang der Inverter 701 bis 708 liegen jeweils acht Inverter 7111 bis 7118, wobei die Kollektoren der Inverter 7111 bis 7714 zusammengeschaltet das NOR-Glied 711 und die Kollektoren der Inverter 7115 bis 7118 zusammengeschaltet das NOR-Glied 712 bilden. Die Zusammenschaltung der Kollektoren wurde in Figur 8 durch je ein Symbol einer Vielfachschaltung angedeutet.

Die NOR-Schaltung 713 der Figur 7 wird gemäß Figur 8 durch die beiden am Ausgang zusammengeschalteten Inverter 7131 und 7132 gebildet. Der Inverter 715 in I²L-Technik ist ein Transistor mit mehreren Kollektoren und das NAND-Glied 716 wird durch Zusammenschalten eines Kollektors (dem dritten Ausgang des zweiten Inverters 715) mit dem Ausgang des Prellschutzes 718 gebildet.

Die Mehrzahl der als NPN-Transistoren ausgebildeten Transistoren der I²L-Schaltung erhalten ihren Injektorstrom über in der Fig. 8 durch Doppelkreise angedeutete Injektoren, die, bis auf die erste Ziffer, einer acht, mit den gleichen Bezugszeichen versehen sind, wie die dazugehörigen Transistoren, also z.B. Injektor (8)111 gehört zu Transistor (7)111 usw. Die Injektortransistoren werden ihrerseits gemeinsam von einer Stromquelle 900 vom Anschluß 51 her gespeist, der, wie Figur 4 zeigt, zum Emitter des Schaltertransistors 50 führt und damit mit der Versorgungsspannung des Tastwahlbausteins TWB verbunden ist, die allerdings nur während des Wählbetriebs vorhanden ist. Um auch bei Sprechbetrieb die Logikschaltung LS funktionsfähig zu erhalten, sind weitere PNP-Transistoren 721 bis 724 vorgesehen, von denen die Transistoren 721 bis 723 Multikollektor-Transistoren mit beispielsweise je acht (Transistoren 721 und 722) und zwei (Transistoren 723) Kollektoren sind. Ihre Emitter sind mit Ausgang 64 und damit über einen Widerstand 641 (Fig. 5) mit dem Anschluß 8 des Schalters 60 verbunden. Ihre Basen liegen am Ausgang 62 der Logikschaltung und ihre Kollektoren an den Basiselektroden der NPN-I²L-Transistoren. Somit bilden die PNP-Transistoren 721 bis 724 Stromquellen, die dann und nur dann arbeiten, wenn Schalter 60 leitend ist. Für ihre Funktion genügt der geringe Spannungsabfall am Schalter 60 und ihre Funktion entspricht der des Transistors 614 in Fig. 5. Die NOR-Glieder 711 bis 713 und der zweite Inverter 715 erhalten folglich außer einer üblichen, beim Wählbetrieb wirksamen Stromversorgung über Injektoren 8111 bis 8118, 8131, 8132 und 815 eine zusätzliche, beim Sprechbetrieb wirksame Stromversorgung über bipolare PNP-Multikollektortransistoren 722 bis 724.

Da die Transistoren in I²L-Technik eine relativ niedrige Stromverstärkung haben, ist es von Vorteil, die Inverter 701 bis 708 im Ausführungsbeispiel der Figur 8 als bipolare Transistoren auszubilden. Beim Sprechbetrieb erhalten sie ihre Stromversorgung für die Basissteuerung über einen bipolaren PNP-Multikollektortransistor 721. Für den Wählbetrieb dagegen ist ein PNP-Multikollektortransistor 720 vorgesehen, dessen Emitter am Ausgang 51 und dessen Basiselektrode an einer in Figur 8 nicht dargestellten Stromspiegelschaltung des Tastwahlbausteins TWB (Figur 4) angeschlossen ist.

Durch die erfindungsgemäße Schaltungsanordnung entfällt in vorteilhafter Weise eine getrennte, dem Sprechkreis Spk (Figur 4) parallele Speisung der Tastwahlschaltung TWS, so daß zusätzliche externe Bauelemente und damit deren Verbindungen mit dem Tastwahlbaustein entfallen. Außerdem stehen der Höhe des Schleifenstromes entsprechende Injektorströme für die Tastwahlschaltung TWS zur Verfügung, so daß ein sicherer Betrieb der erfindungsgemäßen Schaltungsanordnung gewährleistet ist.

Selbstverständlich kann auch der als erster Schalter vorgesehene Transistor 50 in den Tastwahlbaustein TWB integriert werden. Jedoch hat die externe Anschaltung des Transistors 50 gemäß Figur 4 den Vorteil, daß der Tastwahlbaustein auch in einer bisher üblichen Schaltung, wie sie Figur 1 zeigt, eingesetzt werden kann. Es ist dann lediglich der Anschluß für den Emitter des Transistors 50 an das positive Ende 3 der Leitungsschleife anzuschließen.

**Patentansprüche**

1. Schaltungsanordnung zur Umschaltung von tonfrequenter Signalabgabe auf Sprechbetrieb und umgekehrt in Fernmeldegeräten, vorzugsweise Fernsprechgeräten, mit einem Sprechkreis (SpK) und in einem Tastwahlbaustein (TWB) integrierten aus der Leitungsschleife (3,4) gespeisten Tonsignalgeneratoren (TSG) mit einer Tastenanordnung (Ta) zur Teilnehmerwahl, bei der zwei wechselseitig betriebene elektronische Schalter (50,60) vorgesehen sind, wobei der erste Schalter als NPN-Transistor (50) ausgebildet ist, dessen Kollektor am positiven Ende (3) der Leitungsschleife und dessen Emitter mit dem einen Eingang des Tastwahlbausteins (TWB) verbunden ist, dessen anderer Eingang am negativen Ende (4) der Leitungsschleife angeschlossen ist, und der zweite Schalter (60) zwischen dem negativen Ende (4) der Leitungsschleife und dem Sprechkreis (SpK) geschaltet ist, der Verbindungspunkt (Anschluß 8) zwischen Sprechkreis (SpK) und zweitem Schalter (60) zur Steuerung des ersten Schalters mit der Basis des NPN-Transistors (50) verbunden ist und bei der der Tastwahlbaustein (TWB) außer den Tonsignalgeneratoren (TSG) eine an die Tastenanordnung (Ta) angeschlossene und den zweiten Schalter (60) steuernde Tastwahlschaltung (TWS) enthält, deren einer Anschluß mit dem negativen Ende (4) der Leitungsschleife verbunden ist, dadurch gekennzeichnet, daß der andere Anschluß der Tastwahlschaltung (TWS) am Verbindungspunkt (8) angeschlossen ist, so daß der Spannungsabfall am zweiten Schalter (60) die Betriebsspannung der Tastwahlschaltung (TWS) ist.

2. Schaltungsanordnung nach Anspruch 1, dadurch gekennzeichnet, daß der zweite Schalter (60) als komplementäre Darlington-Transistorschaltung ausgebildet ist, die im Tastwahlbaustein (TWB) integriert ist, daß der Leistungstransistor (601) der Darlington-Transistorschaltung vom NPN-Typ ist, dessen Basis am Kollektor eines ersten PNP-Transistors (604) angeschlossen ist und dessen Kollektor der eine am Verbindungspunkt (8) angeschlossene Anschluß und dessen Emitter der andere Anschluß des zweiten Schalters (60) ist und daß die Basis des ersten PNP-Transistors (604) der Steuereingang der Darlington-Transistorschaltung ist.

3. Schaltungsanordnung nach Anspruch 2, dadurch gekennzeichnet, daß die Tastwahlschaltung (TWS) aus einer Logikschaltung (LS) in I²L-Technik und aus einer bipolaren Steuerschaltung (StS) besteht.

4. Schaltungsanordnung nach Anspruch 3, dadurch gekennzeichnet, daß die Steuerschaltung (StS) eine PNPN-Halteschaltung (611,614) und einen dritten NPN-Transistor (621) enthält, daß die PNPN-Halteschaltung einen zweiten NPN-Transistor (611) enthält, dessen Basis zum einen mit dem Kollektor eines zweiten PNP-Transistors (614) und zum anderen mit einem ersten Ausgang (61) der Logikschaltung (LS) verbunden ist und dessen Kollektor mit der Basis des zweiten PNP-Transistors (614), mit dem Steuereingang der Darlington-Transistorschaltung, (601,604) mit einem zweiten Ausgang (62) der Logikschaltung (LS) und dem Kollektor des dritten NPN-Transistors (621) verbunden ist, dessen Basis an einen dritten Ausgang (63) der Logikschaltung (LS) angeschlossen ist und daß die Emitter der NPN-Transistoren der Steuerschaltung (StS) mit dem negativen Ende der Leitungsschleife (4) und der Emitter des PNP-Transistors (614) über einen Widerstand (616) mit dem Kollektor des Leistungstransistors (601) verbunden sind.

5. Schaltungsanordnung nach Anspruch 4, dadurch gekennzeichnet, daß jede Taste der Tastenanordnung (Ta) beim Drücken jeweils zwei Frequenzsteuerleitungen für die Tonsignalgeneratoren auf Bezugspotential (Masse; negatives Ende (4) der Leitungsschleife) schaltet, daß die Logikschaltung (LS) mit je einem ersten Inverter (701—708) an alle Frequenzsteuerleitungen (661—668) angeschlossen ist, daß die ersten Inverter (701—708) in zwei Gruppen aufgeteilt sind, wobei die an Frequenzsteuerleitungen einer ersten Frequenzgruppe angeschlossenen ersten Inverter (701—704) an den Eingängen einer ersten NOR-Schaltung (711) und die an Frequenzsteuerleitungen einer zweiten Frequenzgruppe angeschlossenen ersten Inverter (705—708) an den Eingängen einer zweiten NOR-Schaltung (712) angeschlossen sind, daß der Ausgang des ersten NOR-Gliedes (711) und der Ausgang des zweiten NOR-Gliedes (712) mit den beiden Eingängen eines dritten NOR-Gliedes (713) verbunden ist, daß der Ausgang des dritten NOR-Gliedes (713) mit dem Eingang eines mehrere getrennte Ausgänge aufweisenden zweiten Inverters (715) verbunden ist, daß ein erster Ausgang des zweiten Inverters (715) den ersten Ausgang (61) der Logikschaltung (LS) bildet, daß ein zweiter Ausgang des zweiten Inverters (715) an eine, dem Prellschutz dienende Verzögerungsschaltung (718) angeschlossen ist, deren Ausgang gemeinsam mit einem dritten Ausgang des zweiten Inverters (715) den beiden Eingängen eines NAND-Gliedes (716) zugeführt ist und daß der Ausgang des NAND-Gliedes (716) über einen Inverter (717) mit dem dritten Ausgang (63) der Logikschaltung (LS) verbunden ist.

6. Schaltungsanordnung nach Anspruch 5, dadurch gekennzeichnet, daß zwischen drittem NOR-Glied (713) und zweitem Inverter (715) ein Kondensator (714) angeschlossen ist, dessen anderes Ende mit dem zweiten Ausgang (62) der Logikschaltung (LS) verbunden ist.

7. Schaltungsanordnung nach Anspruch 6, dadurch gekennzeichnet, daß die NOR-Glieder (711, 712, 713), die zweiten und dritten Inverter (715, 717) und das NAND-Glied (716) in I²L-Technik ausgebildet sind und daß die NOR-Glieder (711, 712, 713) und der zweite Inverter (715) außer einer üblichen, beim Wählbetrieb wirksamen Stromversorgung über Injektoren (8111 bis 8118, 8131, 8132, 815) eine zusätzliche, beim Sprechbetrieb wirksame Stromversorgung über bipolare PNP-Multikollektortransistoren (722 bis 724) erhalten.

8. Schaltungsanordnung nach Anspruch 6 oder 7, dadurch gekennzeichnet, daß die ersten Inverter (701 bis 708) als bipolare Transistoren ausgebildet sind und außer einer von der Spannungsversorgung des Tastwahlbausteins (TWB) über einen PNP-Multikollektortransistor (720) abgeleitete, beim Wählbetrieb wirksame Stromversorgung, eine zusätzliche, beim Sprechbetrieb wirksame Stromversorgung über einen bipolaren PNP-Multikollektortransistor (721) erhalten.

**Revendications**

1. Montage pour le passage de la production de signaux à fréquence audible à la conversation, et vice versa, dans des appareils de télécommunication et de préférence des appareils téléphoniques, avec un circuit de conversation (SpK) et des générateurs de signaux à fréquence audible (TSG) alimentés par la ligne bouclée (3, 4), intégrés dans un module de numérotation à touches (TWB) comprenant un clavier (Ta) pour la numérotation de l'abonné; montage dans lequel deux interrupteurs électroniques (50, 60) actionnés alternativement sont prévus, le premier interrupteur étant réalisé sous forme d'un transistor NPN (50), dont le collecteur est relié à l'extrémité positive (3) de la ligne bouclée et dont l'émetteur est relié à une entrée du module de numérotation à touches (TWB), dont l'autre entrée est reliée à l'extrémité négative (4) de la ligne bouclée, et le second interrupteur (60) étant connecté entre l'extrémité négative (4) de la ligne bouclée et le circuit de conversation (SpK), le point de connexion (borne 8) entre le circuit de conversation (SpK) et le second interrupteur (60) étant relié à la base du transistor NPN (50) pour la commande du premier interrupteur; et le module de numérotation à touches (TWB) contient, outre les générateurs de signaux à fréquence audible (TSG), un circuit de numérotation à touches (TWS) relié au clavier (Ta), commandant le second interrupteur (60) et dont une borne est reliée à l'extrémité négative (4) de la ligne bouclée, ledit montage étant caractérisé en ce que la seconde borne du circuit de numérotation à touches (TWS) est reliée au point de connexion (8), de sorte que la chute de tension aux bornes du second interrupteur (60) constitue la tension de service du circuit de numérotation à touches (TWS).

2. Montage selon revendication 1, caractérisé en ce que le second interrupteur (60) est réalisé sous forme d'un circuit de Darlington à transistors complémentaires, intégré dans le module de numérotation à touches (TWB); le transistor de puissance (601) du circuit de Darlington est du type NPN, sa base étant reliée au collecteur d'un premier transistor PNP (604), son collecteur constituent une borne reliée au point de connexion (8) et son émetteur la seconde borne du second interrupteur (60); et la base du premier transistor NPN (604) est l'entrée de commande du circuit de Darlington.

3. Montage selon revendication 2, caractérisé en ce que le circuit de numérotation à touches (TWS) est constitué par un circuit logique (LS) en technique I²L et par un circuit de commande bipolaire (StS).

4. Montage selon revendication 3, caractérisé en ce que le circuit de commande (StS) comprend un circuit de maintien PNPN (611, 614) et un troisième transistor NPN (621); le circuit de maintien PNPN comprend un second transistor NPN (611), dont la base est reliée d'une part au collecteur d'un second transistor PNP (614) et d'autre part à une première sortie (61) du circuit logique (LS), et dont le collecteur est relié à la base du second transistor PNP (614), à l'entrée de commande du circuit de Darlington (601, 604), à une seconde sortie (62) du circuit logique (LS) et au collecteur du troisième transistor NPN (621), dont la base est reliée à une troisième sortie (63) du circuit logique (LS); et les émetteurs des transistors NPN du circuit de commande (StS) sont reliés à l'extrémité négative (4) de la ligne bouclée et l'émetteur du transistor PNP (614) est relié par une résistance (616) au collecteur du transistor de puissance (601).

5. Montage selon revendication 4, caractérisé en ce que chaque touche du clavier (Ta) connecte lors de son enfoncement deux fils de commande de fréquence des générateurs de signaux à fréquence audible au potentiel de référence (masse; extrémité négative (4) de la ligne bouclée); le circuit logique LS est relié par un premier inverseur (701—708) à chacun des fils de commande de fréquence (661—668); les premiers inverseurs (701—708) sont divisés en deux groupes, les premiers inverseurs (701—704) connectés aux fils de commande de fréquence d'un premier groupe de fréquences étant reliés aux entrées d'un premier opérateur NI (711), et les premiers inverseurs (705—708) connectés aux fils de commande de fréquence d'un second groups de fréquences étant reliés aux entrées d'un second opérateur NI (712); la sortie du premier opérateur NI (711) et la sortie du second opérateur NI (712) sont reliées aux deux entrées d'un troisième opérateur NI (713); la sortie du troisième opérateur NI (713) est reliée à l'entrée d'un second inverseur (715) comportant plusieurs sorties séparées; une première sortie du second inverseur (715) constitue la première sortie (61) du circuit logique (LS); une seconde sortie du second inverseur (715) est reliée à la ligne de retard (718) constituant la protection contre les rebondissements de contact et dont la sortie est reliée avec une troisième sortie du second inverseur (715) aux deux entrées d'un opérateur NON-ET (716); et la sortie de l'opérateur NON-ET (716) est reliée par un inverseur (717 à la troisième sortie (63) du circuit logique (LS).

6. Montage selon revendication 5, caractérisé par un condensateur (714) connecté entre le troisième opérateur NI (713) et le second inverseur (715), et dont l'autre borns est reliée à la seconde sortie (62) du circuit logique (LS).

7. Montage selon revendication 6, caractérisé en ce que les opérateurs NI (711, 712, 713), les second et troisième inverseurs (715, 717) et l'opérateur NON-ET (716) sont réalisés en technique I²L; et les opérateurs NI (711, 712, 713) et le second inverseur (715) reçoivent, outre une alimentation classique, assurée pendant la numérotation par des injecteurs (8111 à 8118, 8131, 8132, 815), une alimentation supplémentaire, assurée pendant la conversation par des transistors multicollecteurs bipolaires PNP (722 à 724).

8. Montage selon une des revendications 6 ou 7, caractérisé en ce que les premiers inverseurs (701 à 708) sont réalisés sous forme de transistors bipolaires et reçoivent, outre une alimentation dérivée de celle du module de numérotation à touches (TWB) par un transistor multicollecteur PNP (720) et assurée pendant la numérotation, une alimentation supplémentaire assurée pendant la conversation par un transistor multicollecteur bipolaire PNP (721).

**Claims**

1. Circuit arrangement for switch-over between voice frequency signalling and speech, and vice-versa, in telecommunication apparatus, particularly telephone apparatus, comprising a speaking circuit (SpK) and sound signal generators (TSG) integrated in a key selection component (TWB) and fed from the loop circuit (3,4), with a key system (Ta) for subscriber selection, wherein two alternately operated electronic switches (50,60) are provided, with the first switch being in the form of an NPN transistor (50) whose collector is connected to the positive end (3) of the loop circuit, and whose emitter is connected to one input of the key selection component (TWB), whose other input is connected to the negative end (4) of the loop circuit, and the second switch (60) being connected between the negative end (4) of the loop circuit and the speaking circuit (SpK), with the connecting point (contact 8) between the speaking circuit (SpK) and the second switch (60) connected to the base of the NPN transistor (50) for controlling the first switch, and wherein the key selection component (TWB) contains in addition to the sound signal generators (TSG) a key selection circuit (TWS) which is connected to the key system (Ta) and controls the second switch (60), and whose one contact is connected to the negative end (4) of the loop circuit, characterized in that the other contact of the key selection circuit (TWS) is connected to the connecting point (8) so that the voltage decrease at the second switch (60) is the operating voltage of the key selection circuit (TWS).

2. Circuit arrangement as defined in claim 1, characterized in that the second switch (60) is in the form of a complementary Darlington transistor circuit which is integrated in the key selection component (TWB); in that the power transistor (601) of the Darlington transistor circuit is of the NPN type, with its base connected to the collector of a first PNP transistor (604), its collector being the one contact connected to the connecting point (8), and its emitter being the other contact of the second switch (60); and in that the base of the first PNP transistor (604) is the control input of the Darlington transistor circuit.

3. Circuit arrangement as defined in claim 2, characterized in that the key selection circuit (TWS) consists of a logic circuit (LS) in I²L technology and a bipolar control circuit (StS).

4. Circuit arrangement as defined in claim 3, characterized in that the control circuit (StS) contains a PNPN holding circuit (611,614) and a third NPN transistor (621); in that the PNPN holding circuit contains a second NPN transistor (611), whose base is connected to the collector of a second PNP transistor (614) and to a first output (61) of the logic circuit (LS), and whose collector is connected to the base of the second PNP transistor (614), to the control input of the Darlington transistor circuit (601,604), to a second output (62) of the logic circuit (LS) and to the collector of the third NPN transistor (621), whose base is connected to a third output (63) of the logic circuit (LS); and in that the emitters of the NPN transistors of the control circuit (StS) are connected to the negative end of the loop circuit (4) and the emitter of the PNP transistor (614) is connected to the collector of the power transistor (601) through a resistor (616).

5. Circuit arrangement as defined in claim 4, characterized in that each key of the key system (Ta), when depressed, switches two frequency control lines for the sound signal generators to reference potential (ground; negative end (4) of the loop circuit); in that the logic circuit (LS) is connected to all of the frequency control lines (661—668) with a first inverter (701—708), respectively; in that the first inverters (701—708) are divided up into two groups, with those first inverters (701—704) connected to frequency control lines of a first frequency group being connected to the inputs of a first NOR circuit (711), and those first inverters (705—708) connected to frequency control lines of a second frequency group being connected to the inputs of a second NOR circuit (712); in that the output of the first NOR member (711) and the output of the second NOR member (712) are connected to the two inputs of a third NOR member (713); in that the output of the third NOR member (713) is connected to the input of a second inverter (715) comprising several separated outputs; in that a first output of the second inverter (715) forms the first output (61) of the logic circuit (LS); in that a second output of the second inverter (715) is connected to a delay circuit (718) serving to prevent contact chattering, whose output, together with a third output of the second inverter (715), is led to the two inputs of a NAND member (716); and in that the output of the NAND member (716) is connected to the third output (63) of the logic circuit (LS) through an inverter (717).

6. Circuit arrangement as defined in claim 5, characterized in that there is connected between the third NOR member (713) and the second inverter (715) a capacitor (714) whose other end is connected to the second output (62) of the logic circuit (LS).

7. Circuit arrangement as defined in claim 6, characterized in that the NOR members (711, 712, 713), the second and third inverters (715, 717) and the NAND member (716) are manufactured in I²L technology; and in that the NOR members (711, 712, 713) and the second inverter (715) receive, aside from a usual current supply effective during dialling, through injectors (8111 to 8118, 8131, 8132, 815), an additional current supply effective during speech, through bipolar PNP multicollector transistors (722 to 724).

8. Circuit arrangement as defined in claims 6 or 7, characterized in that the first inverters (701 to 708) are in the form of bipolar transistors and receive, aside from a current supply effective during dialling and derived from the voltage supply of the key selection component (TWB) through a PNP multicollector transistor (720), an additional current supply effective during speech, through a bipolar PNP multicollector transistor (721).

FIG.1

FIG.2

FIG.3

FIG.4

FIG.5

0 016 950

FIG.6

FIG.7

3

FIG.8

Pr. Sch.
τ